# EUROPÄISCHE PATENTSCHRIFT

(11) **EP 2 744 327 B1**
(45) Veröffentlichungstag und Bekanntmachung des Hinweises auf die Patenterteilung: **09.03.2016**
(21) Anmeldenummer: 12750531.1
(22) Anmeldetag: 16.08.2012
(51) Int. Cl.: A01P 13/00, A01N 25/02, A01N 25/30, A01N 57/20

(54) **PESTIZIDZUBEREITUNGEN**
PESTICIDE PREPARATIONS
PRÉPARATIONS PESTICIDES

(30) Priorität: 20.08.2011 DE 102011111152
(43) Veröffentlichungstag der Anmeldung: 25.06.2014
(73) Patentinhaber: CLARIANT INTERNATIONAL LTD, 4132 Muttenz (CH)
(72) Erfinder: WACKER, Andreas, 68163 Mannheim (DE); COHRS, Carsten, 60316 Frankfurt (DE)
(74) Vertreter: Mikulecky, Klaus
(86) Internationale Anmeldenummer: PCT/EP2012/003483
(87) Internationale Veröffentlichungsnummer: WO 2013/026549

(56) Entgegenhaltungen:
- EP-A1- 0 441 764
- WO-A1-2004/107861
- DE-A1-102006 038 661
- US-A1- 2005 032 649

## Beschreibung

Die Erfindung betrifft wässrige, schaumarme und lagerstabile Zusammensetzungen, die wasserlösliche Salze von Glyphosat und quaternäre Ammoniumverbindungen enthalten.

Pestizide (vor allem Fungizide, Herbizide und Insektizide) sind chemische oder natürliche Substanzen, die in Pflanzenzellen, -gewebe oder parasitären Organismen in oder auf der Pflanze eindringen und diese schädigen und/oder zerstören. Den größten Anteil an Pestiziden stellen Herbizide dar. Pestizide werden üblicherweise in Form von Zubereitungen (Formulierungen) eingesetzt, oftmals sind diese Zubereitungen wasserbasierend.

Eine wichtige Rolle spielen wasserlösliche Herbizide, wie beispielsweise die wasserlöslichen Salze des Glyphosats (N-Phosphonomethyl-glycins). Glyphosate werden als sehr umweltverträgliche und gleichzeitig hochwirksame und breit einsetzbare Herbizide in der Agrarwirtschaft in großen Mengen eingesetzt. Sie werden vorzugsweise als Alkalimetall-, Ammonium-, Monoalkyl- oder Dialkylammonium-, Mono-, Di- oder Triethanolammonium, Alkylsulfonium- oder Alkylphosphoniumsalz sowie in Form von Gemischen dieser Salze meistens als wässrige Formulierungen aufgebracht, wo sie auf das Transportsystem der Pflanze einwirken und diese vernichten.

Die biologische Aktivität eines Pestizids kann anhand des Pflanzenwachstums bzw. der Schädigung der Pflanzen durch die Einwirkung des Wirkstoffes auf das Blatt oder über die Wurzeln in Abhängigkeit von der Wirkzeit und der Wirkkonzentration bestimmt werden.

Ein generelles Problem ist, dass nur ein Bruchteil des Wirkstoffes die gewünschte Aktivität entfaltet. Der bei weitem größte Teil geht ungenutzt verloren, indem der Wirkstoff bei der Ausbringung der Spritzbrühe nicht die Blätter oder Wurzeln der Pflanze erreicht und ungenutzt im Boden versickert, durch Regen abgewaschen oder nicht von der Pflanze aufgenommen wird.

Dieser ökologische und ökonomische Nachteil kann durch Zugabe von Hilfsstoffen (Adjuvants) zu Pestizid-Formulierungen reduziert werden. Diese Hilfsstoffe können beispielsweise Spray-Drift reduzieren, die Benetzung der Pflanze verbessern oder dafür sorgen, dass der Wirkstoff länger auf der Pflanzenoberfläche haftet bzw. besser aufgenommen wird. Insbesondere bei wasserlöslichen Pestiziden, wie beispielsweise bei Glyphosat haben die Art sowie die Menge der verwendeten Adjuvants einen entscheidenden Einfluss auf die Wirksamkeit der Formulierung.

Die mit Abstand am häufigsten verwendeten Adjuvants in Glyphosat-Formulierungen sind Fettaminethoxylate, hauptsächlich Talgfettaminethoxylate. Diese Verbindungen sind jedoch aufgrund ihrer toxischen und ökotoxikologischen Eigenschaften, wie der starken Augenreizung oder der Toxizität auf aquatische Organismen, als nicht unbedenklich einzustufen und werden zunehmend durch Adjuvants mit einem besseren toxikologischen und Umweltprofil ersetzt.

Aus der Literatur ist bekannt, dass sich verschiedene quaternäre Ammoniumverbindungen grundsätzlich als Adjuvants für Glyphosat-Formulierungen eignen.

In EP 441 764 werden Glyphosat-Zusammensetzungen enthaltend bestimmte ethoxylierte/propoxylierte Di- oder Trialkyl quaternäre Ammoniumverbindungen beschrieben.

WO 97/36489 offenbart die Verwendung einer Kombination von bestimmten Alkyldimethylaminoxiden mit Tetraalkylammoniumverbindungen als Glyphosat-Adjuvant.

WO 97/36494 beschreibt Glyphosat-Formulierungen, die verschiedene Mono- oder Difettalkyl(hydroxyalkyl)alkylammoniumhalogenide enthalten können, wobei der Fettalkylrest aus 10 bis 18 Kohlenstoffatomen besteht.

WO 2004/107861 offenbart die Kombination einer Reihe von quaternären Fettalkyl-Ammoniumverbindungen und anionischen Tensiden, bei der die Mischung beider Arten von oberflächenaktiven Substanzen zu einer besseren Benetzung (geringe Oberflächenspannung) führt.

Aus WO 2010/020599 sind verdickte Glyphosatformulierungen bekannt, bei denen auch bestimmte quaternäre Fettalkylammoniumverbindungen als Adjuvants eingesetzt werden.

Ein Nachteil bei der Verwendung der bekannten quaternären Ammoniumverbindungen in wässrigen Pestizidzubereitungen ist oftmals, dass diese nicht den heutigen Anforderungen hinsichtlich toxikologischer und ökotoxikologischer Unbedenklichkeit genügen. Diese Verbindungen sind als umweltgefährlich oder reizend gekennzeichnet bzw. werden teilweise gezielt als Biozide eingesetzt. Zudem weisen Sie eine sehr hohe Schaumneigung auf, die zu großen Problemen bei der Verwendung in Pflanzenschutzformulierungen führt.

Die Anforderungen an Adjuvants in wässrigen Pestizidzubereitungen sind im Laufe der Jahre stetig angewachsen. Neben hoher biologischer Wirksamkeit und Unbedenklichkeit (sowohl aus Sicht des Anwenders als auch unter Umweltgesichtspunkten) werden zunehmend weitere vorteilhafte anwendungstechnische Eigenschaften gefordert. Die Adjuvants sollen eine möglichst hohe Beladung der Formulierung mit dem Wirkstoff ermöglichen und müssen dabei mit verschiedenen Wirkstoffen kompatibel sein. Die Formulierungen müssen lagerstabil sein und eine möglichst niedrige Viskosität aufweisen, um eine leichtere Handhabung zu gewährleisten, sowie die möglichst vollständige Entleerung der Gebinde erleichtern. Außerdem ist eine gute Mischbarkeit und schnelles Lösevermögen (auch in kaltem Wasser) beim Ansetzen der Spritzbrühe gefordert. Besonders bedeutend ist zudem eine geringe Schaumneigung, da es sonst beim Verdünnen der Formulierung mit Waser leicht zu unerwünschter Schaumbildung bis zum Überschäumen aus dem Tank kommen kann.

Es stellte sich die Aufgabe, neue hochwirksame wässrige Glyphosatzubereitungen zur Verfügung zu stellen, die die genannten Anforderungen erfüllen und sich insbesondere durch anwendungstechnisch vorteilhafte Eigenschaften, vor allem eine geringe Schaumneigung, auszeichnen und in toxikologischer sowie ökologischer Sicht vorteilhaft sind.

Überraschenderweise wird die Aufgabe gelöst durch Zusammensetzungen enthaltend
a) ein oder mehrere wasserlösliche Salze von Glyphosat,
b) ein oder mehrere quaternäre Ammoniumverbindungen der Formel (I)

   R¹R²R³N+-(CₘH₂ₘO)ₚH X- (I)

   worin R¹ für eine lineare oder verzweigte Alkylgruppe mit 8 bis 10 Kohlenstoffatomen steht, R² und R³ gleich sind und jeweils für eine Methylgruppe stehen, m 2 ist, p 1 ist und X für Chlor steht, und
c) Wasser.

Die quaternären Ammoniumverbindungen der Formel (I) eignen sich als Adjuvants in den erfindungsgemäßen Zusammensetzungen zur Verbesserung der biologischen Aktivität von Herbiziden, Insektiziden, Fungiziden, Akariziden, Bakteriziden, Molluskiden, Nematiziden und Rodentiziden.

Durch die Verwendung der quaternären Ammoniumverbindungen der Formel (I) lassen sich nun erfindungsgemäße Zusammensetzungen herstellen, die lagerstabil sind und sich durch vorteilhafte anwendungstechnische Eigenschaften wie hohe und flexible Wirkstoffbeladung, niedrige Viskosität und geringe Schaumneigung sowie toxikologisch und ökotoxikologische Unbedenklichkeit auszeichnen.

Unter wasserlöslichen Glyphosatsalze im Sinne der Erfindung sind Glyphosatsalze zu verstehen, die bei Raumtemperatur (25°C) eine Löslichkeit von mehr 10 g/l und vorzugsweise mehr als 50 g/l Wasser aufweisen.

Unter den wasserlöslichen Salzen des Glyphosats sind wiederum die Alkalimetall-, Ammonium-, Monoalkyl- oder Dialkylammonium-, Mono-, Di- oder Triethanolammonium, Alkylsulfonium-, Alkylphosphonium, Sulfonylamin- oder Aminoguanidinsalze sowie Gemische dieser Salze bevorzugt. Hierbei bedeutet "Monoalkylammonium" besonders bevorzugt "Isopropylammonium". Unter den Alkalimetallsalzen ist das Kaliumsalz besonders bevorzugt.

Die eine oder die mehreren quaternären Ammoniumverbindungen der Formel (I) können zur Herstellung der erfindungsgemäßen Zusammensetzungen insbesondere in Form von wässrigen Lösungen eingesetzt werden. Der Aktivgehalt an der einen oder den mehreren quaternären Ammoniumverbindungen der Formel (I) in diesen wässrigen Lösungen beträgt vorzugsweise 20 bis 60 Gew.-%.

In der einen oder den mehreren quaternären Ammoniumverbindungen der Formel (I) steht der Rest R¹ für eine lineare oder verzweigte Alkylgruppe mit 8 bis 10 Kohlenstoffatomen. Die Reste R² und R³ sind gleich und stehen jeweils für eine Methylgruppe. Bei den Alkoxygruppen handelt es sich um Ethoxy (m = 2), p ist 1 und X steht für Chlor.

Insbesondere bevorzugt sind quaternäre Ammoniumverbindungen der Formel (I), worin R¹ für eine lineare oder verzweigte Alkylgruppe mit 8 Kohlenstoffatomen steht, R² und R³ gleich sind und jeweils für eine Methylgruppe stehen, m 2 ist, p 1 ist und X für Chlor steht.

Weiterhin insbesondere bevorzugt sind quaternäre Ammoniumverbindungen der Formel (I), worin R¹ für eine lineare oder verzweigte Alkylgruppe mit 10 Kohlenstoffatomen steht, R² und R³ gleich sind und jeweils für eine Methylgruppe stehen, m 2 ist, p 1 ist und X für Chlor steht.

In einer weiteren insbesondere bevorzugten Ausführungsform der Erfindung enthalten die erfindungsgemäßen Zusammensetzungen eine oder mehrere quaternäre Ammoniumverbindungen der Formel (I), worin R¹ für eine lineare oder verzweigte Alkylgruppe mit 8 bis 10 Kohlenstoffatomen steht und wobei die Menge an Ammoniumverbindungen der Formel (I), worin R¹ eine lineare oder verzweigte Alkylgruppe mit 8 bis 9, und besonders bevorzugt 8 Kohlenstoffatomen ist, von 5 bis 100 Gew.-%, vorzugsweise von 7 bis 100 Gew.-% und besonders bevorzugt von 9 bis 100 Gew.-% ist, und wobei die genannten Mengen jeweils auf die Gesamtmenge an quaternären Ammoniumverbindungen der Formel (I) in den erfindungsgemäßen Zusammensetzungen bezogen sind (im Folgenden "Ausführungsform A der Erfindung").

In einer unter Ausführungsform A der Erfindung wiederum bevorzugten Ausführungsform der Erfindung enthalten die erfindungsgemäßen Zusammensetzungen mehrere quaternäre Ammoniumverbindungen der Formel (I), wobei in 5 bis 20 Gew.-%, vorzugsweise in 7 bis 15 Gew.-% und besonders bevorzugt in 9 bis 13 Gew.-% der Ammoniumverbindungen der Formel (I) die Reste R¹ für eine lineare oder verzweigte Alkylgruppe mit 8 Kohlenstoffatomen stehen und in 80 bis 95 Gew.-%, vorzugsweise in 85 bis 93 Gew.-% und besonders bevorzugt in 87 bis 91 Gew.-% der Ammoniumverbindungen der Formel (I) die Reste R¹ für eine lineare oder verzweigte Alkylgruppe mit 10 Kohlenstoffatomen stehen. Die genannten Mengen sind jeweils auf die Gesamtmenge an quaternären Ammoniumverbindungen der Formel (I) in den erfindungsgemäßen Zusammensetzungen bezogen. In einer hierunter wiederum bevorzugten Ausführungsform der Erfindung ist der Rest R¹ der in den erfindungsgemäßen Zusammensetzungen enthaltenen quaternären Ammoniumverbindungen der Formel (I) ausgewählt aus linearen und verzweigten Alkylgruppen mit 8 und 10 Kohlenstoffatomen.

In einer weiteren unter Ausführungsform A der Erfindung wiederum bevorzugten Ausführungsform der Erfindung enthalten die erfindungsgemäßen Zusammensetzungen mehrere quaternäre Ammoniumverbindungen der Formel (I), wobei in 30 bis 70 Gew.-%, vorzugsweise in 35 bis 65 Gew.-% und besonders bevorzugt in 40 bis 60 Gew.-% der Ammoniumverbindungen der Formel (I) die Reste R¹ für eine lineare oder verzweigte Alkylgruppe mit 8 Kohlenstoffatomen stehen und in 30 bis 70 Gew.-%, vorzugsweise in 35 bis 65 Gew.-% und besonders bevorzugt in 40 bis 60 Gew.-% der Ammoniumverbindungen der Formel (I) die Reste R¹ für eine lineare oder verzweigte Alkylgruppe mit 10 Kohlenstoffatomen stehen. Die genannten Mengen sind jeweils auf die Gesamtmenge an quaternären Ammoniumverbindungen der Formel (I) in den erfindungsgemäßen Zusammensetzungen bezogen. In einer hierunter wiederum bevorzugten Ausführungsform der Erfindung ist der Rest R¹ der in den erfindungsgemäßen Zusammensetzungen enthaltenen quaternären Ammoniumverbindungen der Formel (I) ausgewählt aus linearen und verzweigten Alkylgruppen mit 8 und 10 Kohlenstoffatomen.

Sowohl in der oben genannten Ausführungsform A der Erfindung als auch in den ebenfalls oben genannten unter Ausführungsform A der Erfindung wiederum bevorzugten Ausführungsformen der Erfindung sind in der einen oder den mehreren quaternären Ammoniumverbindungen der Formel (I) R² und R³ gleich und stehen für eine Methylgruppe, ist m 2 und ist p 1 und steht X für Chlor.

Die Alkylgruppen R¹ der einen oder mehreren quaternären Ammoniumverbindungen der Formel (I) sind vorzugsweise linear.

Sofern die erfindungsgemäßen Zusammensetzungen eine oder mehrere quaternäre Ammoniumverbindungen R¹R²R³N⁺-(CₘH₂ₘO)ₚ∗H X⁻ enthalten, in denen R¹, R², R³, m und X zwar die bei den quaternären Ammoniumverbindungen der Formel (I) angegebenen Bedeutungen besitzen, die sich aber von den quaternären Ammoniumverbindungen der Formel (I) dadurch unterscheiden, dass p* zwar eine Zahl größer als 0 ist, aber eine andere Zahl ist als für p in den quaternären Ammoniumverbindungen der Formel (I) angegeben (im Folgenden werden diese Verbindungen als "quaternäre Ammoniumverbindungen der Formel (I*)" bezeichnet), und beispielsweise p* eine Zahl von 2 bis 50 ist, ist die Menge der einen oder der mehreren quaternären Ammoniumverbindungen der Formel (I) in diesen erfindungsgemäßen Zusammensetzungen und bezogen auf die Summe der Mengen der einen oder der mehreren quaternären Ammoniumverbindungen der Formel (I) und der einen oder der mehreren Ammoniumverbindungen der Formel (I*) in diesen erfindungsgemäßen Zusammensetzungen vorzugsweise 30 Gew.-% oder größer, besonders bevorzugt 50 Gew.-% oder größer, insbesondere bevorzugt 80 Gew.-% oder größer und außerordentlich bevorzugt 95 Gew.-% oder größer.

Mit den oben beschriebenen quaternären Ammoniumverbindungen der Formel (I) lassen sich erfindungsgemäße Zusammensetzungen, insbesondere wässrige Herbizid-Formulierungen, mit ausgezeichneten anwendungstechnischen Eigenschaften herstellen. Die Schaumneigung ist dabei im Vergleich zu anderen quaternären Ammoniumverbindungen deutlich reduziert. Zudem sind die toxikologischen und ökotoxikologischen Eigenschaften der erfindungsgemäßen Zusammensetzungen wesentlich verbessert.

Die Herstellung der quaternären Ammoniumverbindungen der Formel (I) ist hinlänglich vorbeschrieben und dem Fachmann bekannt.

Bei der Formulierung von wässrigen Pestizidzusammensetzungen ist man bestrebt, die Zusammensetzung mit einer möglichst hohen Konzentration an Wirkstoff zu beladen. Dies reduziert Verpackungs-, Transport-, Lager- und Entsorgungskosten. Daher sollte ein zeitgemäßes Adjuvant in der Lage sein, stabile hochbeladene Pestizidzusammensetzungen, sogenannte "High-Load-Formulierungen", zu ermöglichen. Dies wird mit den quaternären Ammoniumverbindungen der Formel (I) ermöglicht.

In einer bevorzugten Ausführungsform der Erfindung beträgt die Menge des einen oder der mehreren wasserlöslichen Glyphosat Salze der Komponente a) in den erfindungsgemäßen Zusammensetzungen von 80 bis 800 g/l, bevorzugt von 200 bis 700 g/l und besonders bevorzugt von 300 bis 650 g/l. Diese Mengenangaben beziehen sich auf die gesamte erfindungsgemäße Zusammensetzung und im Falle von Pestiziden, die in Form ihrer wasserlöslichen Salze eingesetzt werden (wie üblicherweise beispielsweise Glyphosat) auf die Menge an freier Säure, dem sogenannten Säureäquivalent ("acid equivalent", a.e.).

In einer weiteren bevorzugten Ausführungsform der Erfindung beträgt die Menge der einen oder der mehreren quaternären Ammoniumverbindungen der Formel (I) in den erfindungsgemäßen Zusammensetzungen von 20 bis 250 g/l, bevorzugt von 40 bis 200 g/l und besonders bevorzugt von 50 bis 150 g/l. Diese Mengenangaben beziehen sich auf die gesamte erfindungsgemäße Zusammensetzung.

Üblicherweise werden die quaternären Ammoniumverbindungen der Formel (I) in Form von wässrigen Lösungen eingesetzt. Zur Klarstellung sei hier erwähnt, dass sich die oben genannten Mengenangaben dabei auf den Aktivgehalt der quaternären Ammoniumverbindungen der Formel (I) in der wässrigen Lösung und auf die gesamte erfindungsgemäße Zusammensetzung beziehen.

Ein wichtiges Kriterium für die Lagerstabilität von wässrigen Pestizidzusammensetzungen wie beispielsweise Glyphosat- ist die Phasenstabilität. Dabei ist der sogenannte Trübungspunkt eine Messgröße für die Bestimmung der Phasenstabilität. Es handelt sich hierbei um die Temperatur, bis zu der eine wässrige Formulierung ohne Phasentrennung erwärmt werden kann.

Bis zum Erreichen des Trübungspunktes liegen in der wässrigen Formulierung die Tenside und das Pestizid in definierten Konzentrationen als klare homogene Lösung vor. Beim Erwärmen auf Temperaturen oberhalb des Trübungspunktes trübt die zuvor transparente Formulierung zunächst ein, das Tensid trennt sich von der Lösung und beim Stehen lassen kommt es zur Phasenseparation.

Der Trübungspunkt einer Zusammensetzung wird typischerweise bestimmt, indem man die Lösung bis zum Auftreten einer Trübung erwärmt. Im Anschluss daran lässt man die Zusammensetzung unter Rühren und stetiger Temperaturkontrolle abkühlen. Die Temperatur, bei der die eingetrübte Lösung wieder aufklart, wird als Messwert des Trübungspunkts dokumentiert.

Die erfindungsgemäßen Zusammensetzungen liegen bei 25 °C vorzugsweise als klare homogene Lösungen vor.

Die erfindungsgemäßen Zusammensetzungen zeichnen sich durch einen Trübungspunkt von vorzugsweise größer 55 °C, besonders bevorzugt von größer 70 °C und insbesondere bevorzugt von größer 80 °C aus.

Die erfindungsgemäßen Zusammensetzungen können neben der einen oder den mehreren quaternären Ammoniumverbindungen der Formel (I) ein oder mehrere weitere Hilfsstoffe enthalten, wobei es sich bei diesen beispielsweise um Lösungsmittel, Konservierungsmittel, Netzmittel, andere oberflächenaktive Substanzen, Kältestabilisatoren oder Entschäumer handeln kann.

Als zusätzliche Lösungsmittel in den erfindungsgemäßen Zusammensetzungen eignen sich wassermischbare Lösemittel wie beispielsweise N-Methylpyrrolidon, Butyrolacton, Milchsäureester, Ester der Kohlensäure wie Propylencarbonat und ein oder mehrwertige aliphatische Alkohole wie Mono- oder Polypropylenglykol, Glycerin, Mono- oder Polyethylenglykol.

Als Konservierungsmittel können organische Säuren und ihre Ester, beispielsweise Ascorbinsäure, Ascorbinpalmitat, Sorbat, Benzoesäure, Methyl- und Propyl-4-hydroxybenzoat, Propionate, Phenol, beispielsweise 2-Phenylphenat, 1,2-Benzisothiazolin-3-on, Formaldehyd, schwefelige Säure und deren Salze eingesetzt werden.

Als Netzmittel können Alkoholalkoxylate oder anionische sulfatierte oder sulfonierte Verbindungen verwendet werden.

Als Kältestabilisatoren können alle üblichen für diesen Zweck einsetzbaren Stoffe fungieren. Beispielhaft seien Glycerin oder (Poly)glykole genannt.

Als Entschäumer eignen sich Fettsäurealkylesteralkoxylate, Organopolysiloxane wie Polydimethylsiloxane und deren Gemische mit mikrofeiner, gegebenenfalls silanierter Kieselsäure; Perfluoralkylphosphonate und -phosphinate, Paraffine, Wachse und Mikrokristallinwachse und deren Gemische mit silanierter Kieselsäure. Vorteilhaft sind auch Gemische verschiedener Schauminhibitoren, beispielsweise solche aus Silikonöl, Paraffinöl und/oder Wachsen.

In einer weiteren bevorzugten Ausführungsform der Erfindung enthalten die erfindungsgemäßen Zusammensetzungen neben der einen oder den mehreren quaternären Ammoniumverbindungen der Formel (I) ein oder mehrere weitere Adjuvants (II).

Besonders bevorzugt sind dabei Adjuvants (IIa) - (IIf), die üblicherweise in wässrigen Pestizidzusammensetzungen, wie beispielsweise in wässrigen Glyphosat-Formulierungen, eingesetzt werden. Die besonders bevorzugten Adjuvants (IIa) - (IIf) sind ausgewählt aus der Gruppe bestehend aus:
(IIa) einem oder mehreren Fettaminethoxylaten der Formel (IIa) 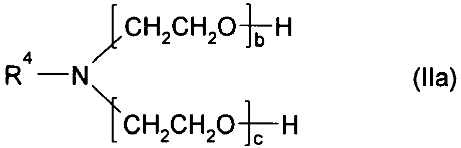 worin R⁴ für eine lineare oder verzweigte, gesättigte oder ungesättigte Kohlenwasserstoffgruppe, vorzugsweise für eine Alkylgruppe, mit 8 bis 22 Kohlenstoffatomen steht, und b und c jeweils unabhängig voneinander Zahlen von 1 bis 10 sind,
(IIb) einem oder mehreren Etheraminethoxylaten der Formel (IIb) 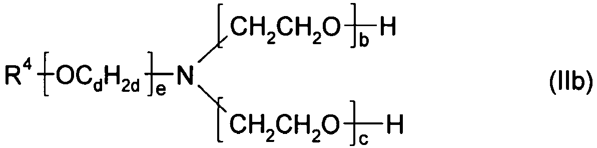 worin R⁴ für eine lineare oder verzweigte, gesättigte oder ungesättigte Kohlenwasserstoffgruppe, vorzugsweise für eine Alkylgruppe, mit 8 bis 22 Kohlenstoffatomen steht, d 2 oder 3 ist, e eine Zahl von 1 bis 5 ist, und b und c jeweils unabhängig voneinander Zahlen von 1 bis 10 sind,
(IIc) einem oder mehreren Betainen, Amidoalyklbetainen der Formel (IIc)

   R⁴-[CONH-(CH₂)ₙ]ₐN⁺R⁵R⁶-CH₂-COO⁻ (IIc)

   worin R⁴ für eine lineare oder verzweigte, gesättigte oder ungesättigte Kohlenwasserstoffgruppe, vorzugsweise für eine Alkylgruppe, mit 8 bis 22 Kohlenstoffatomen steht, R⁵ und R⁶ jeweils unabhängig voneinander für eine Methyl- oder Ethylgruppe stehen, n eine Zahl von 1 bis 5 ist und a 0 oder 1 ist,
(IId) einem oder mehreren Aminoxiden, Amidoalyklaminoxiden der Formel (IId)

   R⁴-[CONH-(CH₂)ₙ]ₐN⁺R⁵R⁶-O⁻ (IId)

   worin R⁴ für eine lineare oder verzweigte, gesättigte oder ungesättigte Kohlenwasserstoffgruppe, vorzugsweise für eine Alkylgruppe, mit 8 bis 22 Kohlenstoffatomen steht, R⁵ und R⁶ jeweils unabhängig voneinander für eine Methyl- oder Ethylgruppe stehen, n eine Zahl von 1 bis 5 ist und a 0 oder 1 ist,
(IIe) einem oder mehreren Polyglycosiden der Formel (IIe) 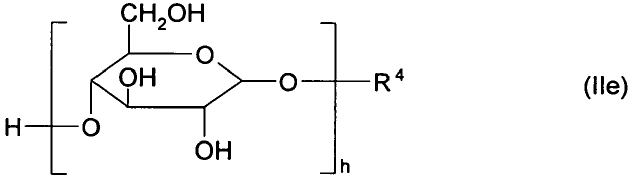 worin R⁴ für eine lineare oder verzweigte, gesättigte oder ungesättigte Kohlenwasserstoffgruppe, vorzugsweise für eine Alkylgruppe, mit 8 bis 22 Kohlenstoffatomen steht, und h eine Zahl von 1 bis 5 ist, und
(IIf) einem oder mehreren Copolymeren (IIf), die erhältlich sind durch Copolymerisation von
   i) Glycerin,
   ii) einer oder mehreren Dicarbonsäuren und
   iii) einer oder mehreren Monocarbonsäuren R⁷-COOH,
      wobei R⁷ für (C₅-C₂₉)-Alkyl, (C₇-C₂₉)-Alkenyl, Phenyl oder Naphthyl steht und 19,9 bis 99 Gew.-% der Komponente i), 0,1 bis 30 Gew.-% der Komponente ii) und 0,9 bis 80 Gew.-% der Komponente iii) enthalten.

In einzelnen Etheraminethoxylaten der Formel (IIb) können in dem Fall, dass sie mehrere Struktureinheiten der Formel -(OC_{d}H_{2d})- enthalten, auch verschiedene Struktureinheiten der Formel -(OC_{d}H_{2d})- enthalten sein, d. h. sowohl Struktureinheiten der Formel -(C₂H₄O)- als auch Struktureinheiten der Formel -(C₃H₆O)-.

Bei den Adjuvants (IIa) bis (IIf) handelt es sich üblicherweise um oberflächenaktive Substanzen.

In einer weiteren bevorzugten Ausführungsform der Erfindung beträgt das Gewichtsverhältnis der einen oder der mehreren quaternären Ammoniumverbindungen der Formel (I) zu dem einen oder den mehreren weiteren Adjuvants (II) in den erfindungsgemäßen Zusammensetzungen von 95 zu 5 bis 5 zu 95 und bevorzugt von 80 zu 20 bis 20 zu 80.

In einer weiteren bevorzugten Ausführungsform der Erfindung liegen die erfindungsgemäßen Zusammensetzungen als Konzentrat-Formulierungen, die vor dem Gebrauch verdünnt werden, insbesondere mit Wasser (beispielsweise "ready-to-use"-, "in-can"- oder "built-in"-Formulierungen) vor und enthalten das eine oder die mehreren wasserlöslichen Pestizide der Komponente a) in Mengen von 5 bis 80 Gew.-%, bevorzugt von 10 bis 70 Gew.-% und besonders bevorzugt von 20 bis 60 Gew.-% und die eine oder die mehreren quaternären Ammoniumverbindungen der Formel (I) in Mengen von 1 bis 25 Gew.-%, bevorzugt von 2 bis 20 Gew.-% und besonders bevorzugt von 3 bis 15 Gew.-%. Diese Mengenangaben beziehen sich auf die gesamte Konzentrat-Formulierung und im Falle von Pestiziden, die in Form ihrer wasserlöslichen Salze eingesetzt werden auf die Menge an freier Säure, dem sogenannten Säureäquivalent ("acid equivalent", a.e.).

Die erfindungsgemäßen Zusammensetzungen werden vorzugsweise in Form von Spritzbrühen auf die Felder ausgebracht. Dabei werden die Spritzbrühen durch Verdünnung von Konzentrat-Formulierungen mit einer definierten Menge Wasser hergestellt.

In einer weiteren bevorzugten Ausführungsform der Erfindung liegen die erfindungsgemäßen Zusammensetzungen als Spritzbrühen vor und enthalten 0,001 bis 10 Gew.-%, bevorzugt 0,02 bis 3 Gew.-% und besonders bevorzugt 0,025 bis 2 Gew.-% des einen oder der mehreren wasserlöslichen Pestizide der Komponente a) und 0,001 bis 3 Gew.-%, bevorzugt 0,005 bis 1 Gew.-% und besonders bevorzugt 0,01 bis 0,5 Gew.-% der einen oder mehreren quaternären Ammoniumverbindungen der Formel (I). Die genannten Mengenangaben beziehen sich auf die gesamte Spritzbrühe und im Falle von Glyphosat, das in Form von wasserlöslichen Salze eingesetzt wird auf die Menge an freier Säure, dem sogenannten Säureäquivalent ("acid equivalent", a.e.).

Bevorzugt ist die Verwendung der erfindungsgemäßen Zusammensetzungen zur Kontrolle und/oder Bekämpfung von Unkraut.

Diese Verwendungen können vorzugsweise auch im sogenannten Tank-mix-Verfahren stattfinden. Hierbei können also das oder die mehreren wasserlöslichen Pestizide der Komponente a) und die eine oder die mehreren quaternären Ammoniumverbindungen der Formel (I) sowie das Wasser auch in Form einer sogenannten "Tank-mix"- Zubereitung vorliegen. In einer derartigen Zubereitung liegen sowohl das eine oder die mehreren Glyphosat Salze als auch die eine oder die mehreren quaternären Ammoniumverbindungen der Formel (I), letztere gegebenenfalls zusammen mit weiteren Adjuvants, getrennt voneinander vor. Beide Zubereitungen werden vor der Ausbringung, in der Regel kurz vorher, miteinander vermischt, wobei eine erfindungsgemäße Zusammensetzung entsteht.

### Beispiele

Im Folgenden wird die Erfindung anhand von Beispielen verdeutlicht, die jedoch keinesfalls als Einschränkung anzusehen sind.

Verschiedene erfindungsgemäße Zusammensetzungen (siehe Tabelle 1) werden aus einer handelsüblichen wässrigen Lösung von Glyphosat-Isopropylammonium (IPA), 62 Gew.-%ig bzw. Glyphosat-Kalium (K), 58 Gew.-%ig, Adjuvant 1 und Wasser hergestellt. Die so erhaltenen Zusammensetzungen E1, E2 und E3 enthalten 360, 480 und 540 g/l Glyphosat a.e. (a.e.: Säureequivalent).

Von den auf diese Weise hergestellten Zusammensetzungen werden der Trübungspunkt, die Viskosität sowie das Schaumverhalten nach der CIPAC-Methode MT 47.1 ("Persistant Foam") bestimmt. Die Ergebnisse sind in Tabelle 1 dargestellt.

**Tabelle 1 Ergebnisse zur Untersuchung erfindungsgemäßer Glyphosat-Zusammensetzungen**

| Zusammensetzung | | E1 (360 g/l a.e.) | E2 (480 g/l a.e.) | E3 (540 g/l a.e.) |
|---|---|---|---|---|
| Glyphosat-IPA Salz | [g] | 48,6 | 55,8 | |
| Glyphosat-K Salz | [g] | - | - | 66,1 |
| Adjuvant 1 | [g] | 6 | 6 | 6 |
| Wasser | [g] | 62,4 | 59,2 | 62,9 |
| Trübungspunkt | [°C] | > 95 | > 95 | > 95 |
| Viskosität bei 25°C | [mPa· s] | 25 | 115 | 30 |
| Schaum | [ml] | 0 | 0 | 0 |

| | | | | |
|---|---|---|---|---|
| Adjuvant 1 = C_{8/10}-Alkyldimethyl(hydroxyethyl)ammoniumchlorid der Formel (I) | | | | |

Als Vergleichsbeispiele werden auf analoge Weise hergestellte, aber das Adjuvant 2 enthaltende und somit nicht erfindungsgemäße Zusammensetzungen V1, V2 und V3 herangezogen. Die entsprechenden Untersuchungsergebnisse sind in Tabelle 2 dargestellt.

**Tabelle 2 Ergebnisse zur Untersuchung nicht erfindungsgemäßer Glyphosat-Zusammensetzungen**

| Zusammensetzung | | V1 (360 g/l a.e.) | V2 (480 g/l a.e.) | V3 (540 g/l a.e.) |
|---|---|---|---|---|
| Glyphosat-IPA Salz | [g] | 48,6 | 55,8 | - |
| Glyphosat-K Salz | [g] | - | - | 66,1 |
| Adjuvant 2 | [g] | 6 | 6 | 6 |
| Wasser | [g] | 62,4 | 59,2 | 62,9 |
| Trübungspunkt | [°C] | > 95 | > 95 | > 95 |
| Viskosität bei 25°C | [mPa · s] | 35 | 125 | 30 |
| Schaum | [ml] | > 150 | > 150 | > 150 |

| | | | | |
|---|---|---|---|---|
| Adjuvant 2 = C_{12/14}-Alkyldimethyl(hydroxyethyl)ammoniumchlorid | | | | |

Die erfindungsgemäßen Zusammensetzungen E1 bis E3 basierend auf einer quaternären Ammoniumverbindung mit einer C_{8/10}-Alkylkette zeigen keine Schaumentwicklung, während die nicht erfindungsgemäßen Vergleichszusammensetzungen basierend auf einer quaternären Ammoniumverbindung mit einer C_{12/14}-Alkylkette eine hohe Menge persistenten Schaum zeigen.

## Patentansprüche

1. Zusammensetzung enthaltend
a) ein oder mehrere wasserlösliche Pestizide, ausgewählt aus den wasserlöslichen Salzen von Glyphosat,
b) eine oder mehrere quaternäre Ammoniumverbindungen der Formel (I)
R¹R²R³N⁺-(CₘH₂ₘO)ₚH X⁻ (I)
worin
R¹ für eine lineare oder verzweigte Alkylgruppe mit 8 bis 10 Kohlenstoffatomen steht,
R² und R³ gleich sind und jeweils für eine Methylgruppe stehen,
m 2 ist,
p 1 ist und
X für Chlor steht, und
c) Wasser.

2. Zusammensetzung gemäß Anspruch 1, **dadurch gekennzeichnet, dass** in der einen oder den mehreren quaternären Ammoniumverbindungen der Formel (I)
R¹ für eine lineare oder verzweigte Alkylgruppe mit 8 Kohlenstoffatomen steht,
R² und R³ gleich sind und jeweils für eine Methylgruppe stehen,
m 2 ist,
p 1 ist und
X für Chlor steht.

3. Zusammensetzung gemäß Anspruch 1, **dadurch gekennzeichnet, dass** in der einen oder den mehreren quaternären Ammoniumverbindungen der Formel (I)
R¹ für eine lineare oder verzweigte Alkylgruppe mit 10 Kohlenstoffatomen steht,
R² und R³ gleich sind und jeweils für eine Methylgruppe stehen,
m 2 ist,
p 1 ist und
X für Chlor steht.

4. Zusammensetzung gemäß einem oder mehreren der Ansprüche 1 bis 3, **dadurch gekennzeichnet, dass** die Menge des einen oder der mehreren wasserlöslichen Pestizide der Komponente a) in der Zusammensetzung von 80 bis 800 g/l beträgt.

5. Zusammensetzung gemäß einem oder mehreren der Ansprüche 1 bis 4, **dadurch gekennzeichnet, dass** die Menge der einen oder der mehreren quaternären Ammoniumverbindungen der Formel (I) in der Zusammensetzung von 20 bis 250 g/l beträgt.

6. Zusammensetzung gemäß einem oder mehreren der Ansprüche 1 bis 5, **dadurch gekennzeichnet, dass** sie einen Trübungspunkt von größer 55 °C aufweist.

7. Zusammensetzung gemäß einem oder mehreren der Ansprüche 1 bis 6, **dadurch gekennzeichnet, dass** sie neben der einen oder den mehreren quaternären Ammoniumverbindungen der Formel (I) ein oder mehrere weitere Adjuvants (II) enthält.

8. Zusammensetzung gemäß Anspruch 7, **dadurch gekennzeichnet, dass** das eine oder die mehreren Adjuvants (II) ausgewählt sind aus der Gruppe bestehend aus:
(IIa) einem oder mehreren Fettaminethoxylaten der Formel (IIa) 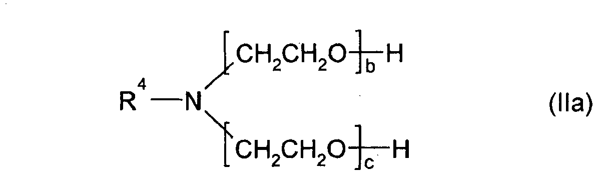 worin
R⁴ für eine lineare oder verzweigte, gesättigte oder ungesättigte Kohlenwasserstoffgruppe mit 8 bis 22 Kohlenstoffatomen steht, und
b und c jeweils unabhängig voneinander Zahlen von 1 bis 10 sind,
(IIb) einem oder mehreren Etheraminethoxylaten der Formel (IIb) 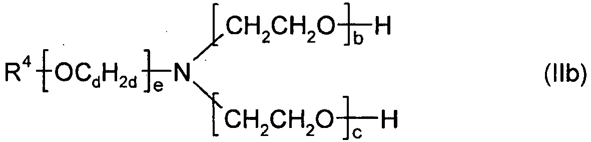 worin
R⁴ für eine lineare oder verzweigte, gesättigte oder ungesättigte Kohlenwasserstoffgruppe mit 8 bis 22 Kohlenstoffatomen steht,
d 2 oder 3 ist,
e eine Zahl von 1 bis 5 ist, und
b und c jeweils unabhängig voneinander Zahlen von 1 bis 10 sind,
(IIc) einem oder mehreren Betainen, Amidoalyklbetainen der Formel (IIc)
R⁴-[CONH-(CH₂)ₙ]ₐN⁺R⁵R⁶-CH₂-COO⁻ (IIc)
worin
R⁴ für eine lineare oder verzweigte, gesättigte oder ungesättigte Kohlenwasserstoffgruppe mit 8 bis 22 Kohlenstoffatomen steht,
R⁵ und R⁶ jeweils unabhängig voneinander für eine Methyl- oder Ethylgruppe stehen,
n eine Zahl von 1 bis 5 ist und
a 0 oder 1 ist,
(IId) einem oder mehreren Aminoxiden, Amidoalyklaminoxiden der Formel (IId)
R⁴-[CONH-(CH₂)ₙ]ₐN⁺R⁵R⁶-O⁻ (IId)
worin
R⁴ für eine lineare oder verzweigte, gesättigte oder ungesättigte Kohlenwasserstoffgruppe mit 8 bis 22 Kohlenstoffatomen steht,
R⁵ und R⁶ jeweils unabhängig voneinander für eine Methyl- oder Ethylgruppe stehen,
n eine Zahl von 1 bis 5 ist und
a 0 oder 1 ist,
(IIe) einem oder mehreren Polyglycosiden der Formel (IIe) 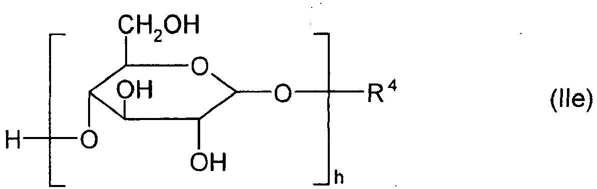 worin
R⁴ für eine lineare oder verzweigte, gesättigte oder ungesättigte Kohlenwasserstoffgruppe mit 8 bis 22 Kohlenstoffatomen steht, und
h eine Zahl von 1 bis 5 ist, und
(IIf) einem oder mehreren Copolymeren (IIf), die erhältlich sind durch Copolymerisation von
i) Glycerin,
ii) einer oder mehreren Dicarbonsäuren und
iii) einer oder mehreren Monocarbonsäuren R⁷-COOH,
wobei R⁷ für (C₅-C₂₉)-Alkyl, (C₇-C₂₉)-Alkenyl, Phenyl oder Naphthyl steht, und 19,9 bis 99 Gew.-% der Komponente i), 0,1 bis 30 Gew.-% der Komponente ii) und 0,9 bis 80 Gew.-% der Komponente iii) enthalten.

9. Zusammensetzung gemäß Anspruch 7 oder 8, **dadurch gekennzeichnet, dass** das Gewichtsverhältnis der einen oder der mehreren quaternären Ammoniumverbindungen der Formel (I) zu dem einen oder den mehreren weiteren Adjuvants (II) von 95 zu 5 bis 5 zu 95 beträgt.

10. Zusammensetzung gemäß einem oder mehreren der Ansprüche 1 bis 9, **dadurch gekennzeichnet, dass** sie als Konzentrat-Formulierung, die vor dem Gebrauch verdünnt wird, vorliegt, und 5 bis 80 Gew.-% des einen oder der mehreren wasserlöslichen Pestizide der Komponente a) und 1 bis 25 Gew.-% der einen oder der mehreren quaternären Ammoniumverbindungen der Formel (I) enthält.

11. Zusammensetzung gemäß einem oder mehreren der Ansprüche 1 bis 9, **dadurch gekennzeichnet, dass** sie als Spritzbrühe vorliegt und 0,001 bis 10 Gew.-% des einen oder der mehreren wasserlöslichen Pestizide der Komponente a) und 0,001 bis 3 Gew.-% der einen oder der mehreren quaternären Ammoniumverbindungen der Formel (I) enthält.

12. Verwendung einer Zusammensetzung nach einem oder mehreren der Ansprüche 1 bis 11 zur Kontrolle und/oder Bekämpfung von Unkraut.

13. Verwendung gemäß Anspruch 12 im Tank-mix-Verfahren.

## Claims

1. A composition comprising
a) one or more water-soluble pesticides, selected from among the water-soluble salts of glyphosate,
b) one or more quaternary ammonium compounds of the formula (I)
R¹R²R³N⁺- (CₘH₂ₘO) pH X⁻ (I)
wherein
R¹ is a linear or branched alkyl group having 8 to 10 carbon atoms,
R² and R³ are identical and are in each case a methyl group,
m is 2,
p is 1 and
X is chlorine, and
c) water.

2. The composition as claimed in claim 1, wherein, in the one or more quaternary ammonium compounds of the formula (I),
R¹ is a linear or branched alkyl group having 8 carbon atoms,
R² and R³ are identical and are in each case a methyl group,
m is 2,
p is 1 and
X is chlorine.

3. The composition as claimed in claim 1, wherein, in the one or more quaternary ammonium compounds of the formula (I),
R¹ is a linear or branched alkyl group having 10 carbon atoms,
R² and R³ are identical and are in each case a methyl group,
m is 2,
p is 1 and
X is chlorine.

4. The composition as claimed in one or more of claims 1 to 3, wherein the amount of the one or more water-soluble pesticides of component a) in the composition is from 80 to 800 g/l.

5. The composition as claimed in one or more of claims 1 to 4, wherein the amount of the one or more quaternary ammonium compounds of the formula (I) in the composition is from 20 to 250 g/l.

6. The composition as claimed in one or more of claims 1 to 5, which has a cloud point of greater than 55°C.

7. The composition as claimed in one or more of claims 1 to 6, which comprises, besides the one or more quaternary ammonium compounds of the formula (I), one or more further adjuvants (II).

8. The composition as claimed in claim 7, wherein the one or more adjuvants (II) are selected from the group consisting of:
(IIa) one or more fatty amine ethoxylates of the formula (IIa) 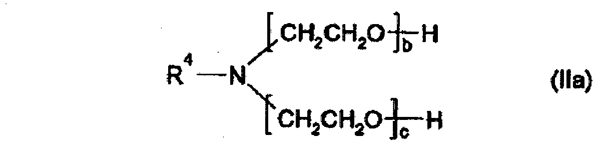 wherein
R⁴ is a linear or branched, saturated or unsaturated hydrocarbon group, having 8 to 22 carbon atoms, and
b and c in each case independently of one another are numbers from 1 to 10,
(IIb) one or more ether amine ethoxylates of the formula (IIb) 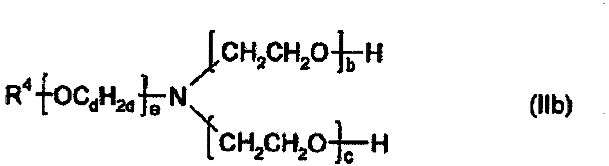 wherein
R⁴ is a linear or branched, saturated or unsaturated hydrocarbon group, having 8 to 22 carbon atoms,
d is 2 or 3,
e is a number from 1 to 5 and
b and c in each case independently of one another are numbers from 1 to 10,
(IIc) one or more betaines, amidoalkylbetaines of the formula (IIc)
**R⁴-[CONH-(CH₂)ₙ]ₐN⁺R⁵R⁶-CH₂-COO-** **(IIc)**
wherein
R⁴ is a linear or branched, saturated or unsaturated hydrocarbon group, having 8 to 22 carbon atoms,
R⁵ and R⁶ in each case independently of one another are a methyl or ethyl group,
n is a number from 1 to 5 and
a is 0 or 1,
(IId) one or more amine oxides, amidoalkylamine oxides of the formula (IId)
**R⁴-[CONH-(CH₂)ₙ]ₐN⁺R⁵R⁸-O⁻** **(IId)**
wherein
R⁴ is a linear or branched, saturated or unsaturated hydrocarbon group, having 8 to 22 carbon atoms,
R⁵ and R⁶ in each case independently of one another are a methyl or ethyl group,
n is a number from 1 to 5 and
a is 0 or 1,
(IIe) one or more polyglycosides of the formula (IIe) 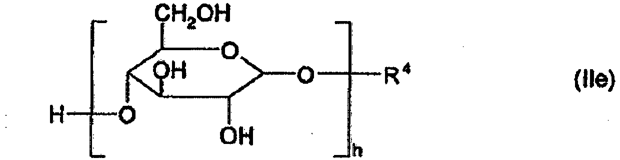 wherein
R⁴ is a linear or branched, saturated or unsaturated hydrocarbon group, having 8 to 22 carbon atoms, and
h is a number from 1 to 5, and
(IIf) one or more copolymers (IIf), which are obtainable by copolymerization of
i) glycerol,
ii) one or more dicarboxylic acids and
iii) one or more monocarboxylic acids R⁷-COOH, wherein R⁷ is (C₅-C₂₉) -alkyl, (C₇-C₂₉) -alkenyl, phenyl or naphthyl, and which comprise 19.9 to 99% by weight of component i), 0.1 to 30% by weight of component ii) and 0.9 to 80% by weight of component iii).

9. The composition as claimed in claim 7 or 8, wherein the weight ratio of the one or more quaternary ammonium compounds of the formula (I) to the one or more further adjuvants (II) is from 95 to 5 up to 5 to 95.

10. The composition as claimed in one or more of claims 1 to 9, which is present as a concentrate formulation which is diluted before use and which comprises from 5 to 80% by weight of the one or more water-soluble pesticides of component a) and from 1 to 25% by weight of the one or more quaternary ammonium compounds of the formula (I).

11. The composition as claimed in one or more of claims 1 to 9, which is present as a spray mixture and which comprises from 0.001 to 10% by weight of the one or more water-soluble pesticides of component a) and from 0.001 to 3% by weight of the one or more quaternary ammonium compounds of the formula (I).

12. The use of a composition as claimed in one or more of claims 1 to 11 for controlling and/or combating weeds.

13. The use as claimed in claim 12 by the tank-mix method.

## Revendications

1. Composition contenant
a) un ou plusieurs pesticides solubles dans l'eau, choisis parmi les sels solubles dans l'eau du glyphosate,
b) un ou plusieurs composés de l'ammonium quaternaire de formule (I)
**R¹R²R³N⁺-(CₘH₂ₘO)ₚH X⁻** **(I)**
dans laquelle
R¹ représente un groupe alkyle à chaîne droite ou ramifiée ayant 8 à 10 atomes de carbone,
R² et R³ sont identiques et représentent chacun un groupe méthyle,
m vaut 2,
p vaut 1, et
X représente le chlore, et
c) de l'eau.

2. Composition selon la revendication 1, **caractérisée en ce que**, dans le ou dans les plusieurs composés de l'ammonium quaternaire de formule (I)
R¹ représente un groupe alkyle à chaîne droite ou ramifiée ayant 8 atomes de carbone,
R² et R³ sont identiques et représentent chacun un groupe méthyle,
m vaut 2,
p vaut 1, et
X représente le chlore.

3. Composition selon la revendication 1, **caractérisée en ce que**, dans le ou dans les plusieurs composés de l'ammonium quaternaire de formule (I),
R¹ représente un groupe alkyle à chaîne droite ou ramifiée ayant 10 atomes de carbone,
R² et R³ sont identiques et représentent chacun un groupe méthyle,
m vaut 2,
p vaut 1, et
X représente le chlore.

4. Composition selon l'une ou plusieurs des revendications 1 à 3, **caractérisée en ce que** la quantité du ou des plusieurs pesticides solubles dans l'eau du composant a) dans la composition est comprise entre 80 et 800 g/l.

5. Composition selon l'une ou plusieurs des revendications 1 à 4, **caractérisée en ce que** la quantité du ou des plusieurs composés de l'ammonium quaternaire de formule (I) dans la composition est comprise entre 20 et 250 g/l.

6. Composition selon l'une ou plusieurs des revendications 1 à 5, **caractérisée en ce qu'**elle présente un point de trouble supérieur à 55°C.

7. Composition selon l'une ou plusieurs des revendications 1 à 6, **caractérisée en ce qu'**elle contient, outre le ou les plusieurs composés de l'ammonium quaternaire de formule (I), un ou plusieurs autres adjuvants (II).

8. Composition selon la revendication 7, **caractérisée en ce que** le ou les plusieurs adjuvants (II) sont choisis dans le groupe consistant en :
(IIa) un ou plusieurs produits d'éthoxylation d'amines grasses de formule (IIa) 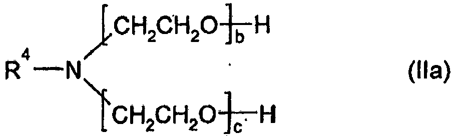 dans laquelle
R⁴ représente un groupe hydrocarboné à chaîne droite ou ramifiée, saturé ou insaturé, ayant 8 à 22 atomes de carbone, et
b et c représentent chacun indépendamment de l'autre un nombre de 1 à 10,
(IIb) un ou plusieurs produits d'éthoxylation d'une étheramine de formule (IIb) 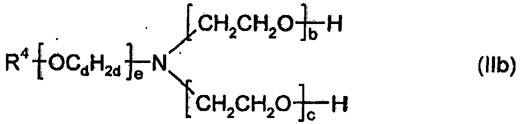 dans laquelle
R⁴ représente un groupe hydrocarboné à chaîne droite ou ramifiée, saturé ou insaturé, ayant 8 à 22 atomes de carbone,
d vaut 2 ou 3,
e est un nombre de 1 à 5, et
b et c représentent chacun indépendamment de l'autre un nombre de 1 à 10,
(IIc) une ou plusieurs bétaïnes, amidoalkylbétaïnes de formule (IIc)
**R⁴-[CONH-(CH₂)ₙ]ₐN⁺R⁵R⁶-CH₂-COO⁻** **(IIc)**
dans laquelle
R⁴ représente un groupe hydrocarboné à chaîne droite ou ramifiée, saturé ou insaturé, ayant 8 à 22 atomes de carbone,
R⁵ et R⁶ représentent chacun indépendamment de l'autre un groupe méthyle ou éthyle,
n est un nombre de 1 à 5, et
a vaut 0 ou 1,
(IId) un ou plusieurs oxydes d'amine, oxydes d'amidoalkylamines de formule (IId)
**R⁴-[CONH-(CH₂)ₙ]ₐN⁺R⁵R⁶-O⁻** **(IId)**
dans laquelle
R⁴ représente un groupe hydrocarboné à chaîne droite ou ramifiée, saturé ou insaturé, ayant 8 à 22 atomes de carbone,
R⁵ et R⁶ représentent chacun indépendamment de l'autre un groupe méthyle ou éthyle,
n est un nombre de 1 à 5, et
a vaut 0 ou 1,
(IIe) un ou plusieurs polyglycosides de formule (IIe) 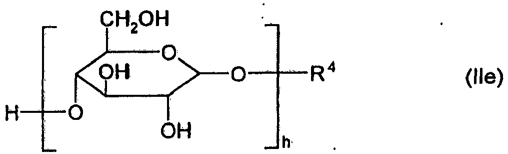 dans laquelle
R⁴ représente un groupe hydrocarboné à chaîne droite ou ramifiée, saturé ou insaturé, ayant 8 à 22 atomes de carbone, et
h est un nombre de 1 à 5, et
(IIf) un ou plusieurs copolymères (IIf), qui peuvent être obtenus par copolymérisation
i) de glycérol,
ii) d'un ou plusieurs acides dicarboxyliques, et
iii) d'un ou plusieurs acides monocarboxyliques R⁷-COOH,
où R⁷ représente un groupe alkyle en C₅-C₂₉, alcényle en C₇-C₂₉, phényle ou naphtyle,
et contiennent 19,9 à 99 % en poids du composant i), 0,1 à 30 % en poids du composant ii) et 0,9 à 80 % en poids du composant iii).

9. Composition selon la revendication 7 ou 8, **caractérisée en ce que** le rapport en poids du ou des plusieurs composés de l'ammonium quaternaire de formule (I) au ou aux plusieurs autres adjuvants (II) est de 95:5 à 5:95.

10. Composition selon l'une ou plusieurs des revendications 1 à 9, **caractérisée en ce qu'**elle se présente sous forme d'une formulation concentrée qui est diluée avant utilisation, et qu'elle contient 5 à 80 % en poids du ou des plusieurs pesticides solubles dans l'eau du composant a) et 1 à 25 % en poids du ou des plusieurs composés de l'ammonium quaternaire de formule (I).

11. Composition selon l'une ou plusieurs des revendications 1 à 9, **caractérisée en ce qu'**elle se présente sous forme d'une bouillie de pulvérisation et contient 0,001 à 10 % en poids du ou des plusieurs pesticides solubles dans l'eau du composant a) et 0,001 à 3 % en poids du ou des plusieurs composés de l'ammonium quaternaire de formule (I).

12. Utilisation d'une composition selon l'une ou plusieurs des revendications 1 à 11 pour la maîtrise de mauvaises herbes et/ou la lutte contre les mauvaises herbes.

13. Utilisation selon la revendication 12 dans le cadre d'un procédé en mélange en cuve.
